# EUROPÄISCHE PATENTSCHRIFT

(11) **EP 1 012 942 B1**
(45) Veröffentlichungstag und Bekanntmachung des Hinweises auf die Patenterteilung: **13.02.2002**
(21) Anmeldenummer: 98948758.2
(22) Anmeldetag: 11.08.1998
(51) Int. Cl.: H02H 9/04

(54) **SCHALTUNGSANORDNUNG ZUM SCHUTZ INTEGRIERTER SCHALTUNGEN VOR ELEKTROSTATISCHEN ENTLADUNGEN**
CIRCUIT ARRANGEMENT FOR PROTECTING INTEGRATED CIRCUITS AGAINST ELECTROSTATIC DISCHARGES
ENSEMBLE CIRCUIT POUR LA PROTECTION DE CIRCUITS INTEGRES CONTRE DES DECHARGES ELECTROSTATIQUES

(30) Priorität: 10.09.1997 DE 19739683
(43) Veröffentlichungstag der Anmeldung: 28.06.2000
(73) Patentinhaber: ROBERT BOSCH GMBH, 70442 Stuttgart (DE)
(72) Erfinder: WILKENING, Wolfgang, D-72793 Pfullingen (DE)
(86) Internationale Anmeldenummer: DE9802294
(87) Internationale Veröffentlichungsnummer: WO9913549

(56) Entgegenhaltungen:
- DE-A- 4 439 125
- MACK W D ET AL: "NEW ESD PROTECTION SCHEMES FOR BICMOS PROCESSES WITH APPLICATION TOCELLULAR RADIO DESIGNS" PROCEEDINGS OF THE INTERNATIONAL SYMPOSIUM ON CIRCUITS AND SYSTEMS, SAN DIEGO, MAY 10 - 13, 1992, Bd. 6, Nr. CONF. 25, 10. Mai 1992, Seiten 2699-2702, XP000338785 INSTITUTE OF ELECTRICAL AND ELECTRONICS ENGINEERS

## Beschreibung

Die Erfindung betrifft eine Schaltungsanordnung zum Schutz integrierter Schaltungen vor elektrostatischen Entladungen an einem Bauelement dieser integrierten Schaltungen mit den im Oberbegriff des Anspruchs 1 genannten Merkmalen.

### Stand der Technik

Es ist bekannt, daß bei der Herstellung integrierter Schaltungen, insbesondere bei sogenannten Mischprozessen, bei denen unterschiedliche Fertigungstechniken, beispielsweise die gemeinsame Fertigung von Bipolar- und MOS-Transistoren, erfolgen soll, elektrostatische Entladungen auftreten können. Diese elektrostatischen Entladungen führen zu Spannungsspitzen, die zu einer Zerstörung der integrierten Schaltungen führen können.

### Vorteile der Erfindung

Zum Schutz der integrierten Schaltungen können MOS-Schutztransistoren eingesetzt werden, deren Gateanschluß über eine Schaltstrecke eines weiteren MOS-Transistors mit dem Sourceanschluß des Schutztransistors verbunden ist. Ein von einer elektrostatischen Entladung hervorgerufener Spannungsimpuls liegt am Drainanschluß des Schutztransistors und am Gateanschluß des zweiten MOS-Transistors an. Hierbei wird der Effekt ausgenutzt, daß die Durchbruchspannung eines MOS-Transistors bei variierender Gatespannung ein Minimum bei etwa 0,5 Volt oberhalb einer Schwellspannung des MOS-Transistors besitzt. Diese Durchbruchspannung stellt den Arbeitspunkt für einen wirksamen Schutz vor elektrostatischen Entladungen dar. Tritt nunmehr ein Spannungsimpuls infolge einer elektrostatischen Entladung auf, wird die Gatespannung des Schutztransistors infolge einer Gate-Drain-Kapazität kurzzeitig über die Schwellspannung angehoben. Gleichzeitig schaltet jedoch auch der zweite MOS-Transistor durch, da der Spannungsimpuls an dessen Gateanschluß anliegt, so daß die Gatespannung des Schutztransistors wieder unter die Schwellspannung sinkt. Der Arbeitspunkt des Schutztransistors wird somit nur kurzzeitig während des Auftretens des Spannungsimpulses der elektrostatischen Entladung durchlaufen, so daß hierdurch eine Designunsicherheit gegeben ist.

Die erfindungsgemäße Schaltungsanordnung mit den im Anspruch 1 genannten Merkmalen bietet den Vorteil, daß neben der Gewährleistung eines wirksamen Schutzes vor elektrostatischen Entladungen in einfacher Weise eine kontrollierte Einstellung des Arbeitspunktes des Schutztransistors für die gesamte Dauer eines elektrostatischen Entladungspulses möglich ist. Dadurch, daß zwischen dem Sourceanschluß des zweiten MOS-Transistors und dem Sourceanschluß des MOS-Transistors wenigstens eine Diode in Flußrichtung geschaltet ist, kann der an sich bekannte Effekt der Diode ausgenutzt werden, daß Spannungen nahezu konstant gehalten werden. Hierdurch wird die Gatespannung des MOS-Transistors während der gesamten Zeitdauer des Pulses der elektrostatischen Entladung oberhalb der Schwellspannung gehalten, so daß der Spannungspuls der elektrostatischen Entladung über den Schutztransistor kontrolliert abgebaut werden kann.

Anstelle der Diode kann auch eine geeignete Zenerdiode in Sperrichtung geschaltet sein.

Vorteilhafte Ausgestaltungen der Erfindung ergeben sich aus den übrigen, in den Unteransprüchen genannten Merkmalen.

### Zeichnung

Die Erfindung wird nachfolgend in einem Ausführungsbeispiel anhand der zugehörigen Zeichnung, die die erfindungsgemäße Schaltungsanordnung zeigt, näher erläutert.

### Beschreibung des Ausführungsbeispiels

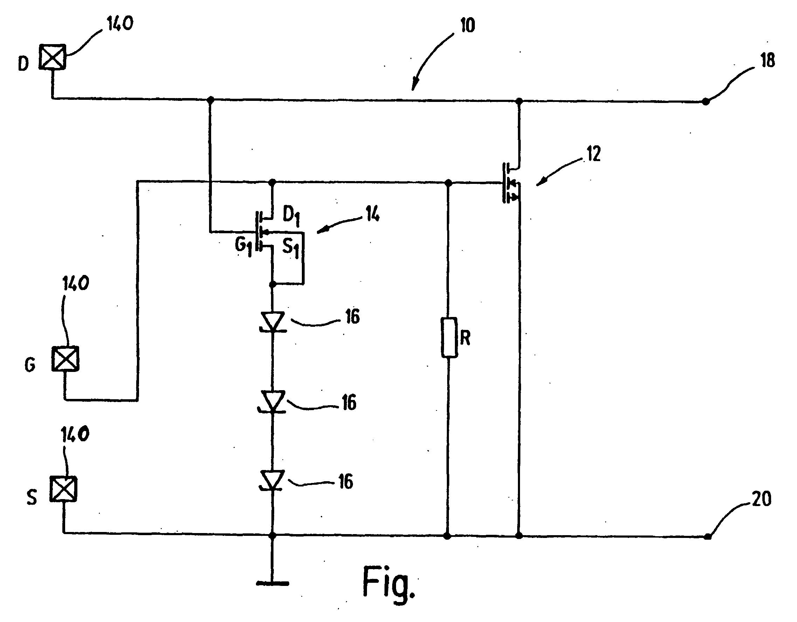

In der Figur ist eine Schutzschaltung 10 zum Schutz von integrierten Schaltungen vor elektrostatischen Entladungen gezeigt. Die Schutzschaltung 10 umfaßt einen MOS-Schutztransistor 12, dessen Drainanschluß D, Gateanschluß G und Sourceanschluß S jeweils über Kontaktpads 140 kontaktierbar sind. Der Drainanschluß D des MOS-Schutztransistors 12 ist mit einem Gateanschluß G₁ eines MOS-Feldoxid-Transistors 14 verbunden, dessen Drainanschluß D₁ mit dem Gateanschluß G des Schutztransistors 12 und dessen Sourceanschluß S₁ über eine Reihenschaltung von Dioden 16 mit dem Sourceanschluß S des Schutztransistors 12 verbunden ist. Zwischen dem Gateanschluß G und dem Sourceanschluß S des MOS-Schutztransistors 12 ist ein relativ hochohmiger Widerstand R geschaltet.

Nach weiteren Ausführungsbeispielen, kann die Anzahl der Dioden 16 variiert sein. So können beispielsweise lediglich eine Diode 16, zwei Dioden 16 oder auch mehr als drei Dioden 16 in Reihe geschaltet sein.

An die Ausgangsanschlüsse 18 und 20 der Schutzschaltung 10 schließt sich eine nicht dargestellte - zu schützende - Schaltungsanordnung an.

Durch die gefundene Schaltungsanordnung wird folgendes erreicht:

Bei einem am Drainanschluß D anliegenden positiven Spannungspuls infolge einer elektrostatischen Entladung wird die Gatespannung des Schutztransistors 12 - durch eine Gate-Drain-Kapazität des Transistors 12 - über eine Schwellspannung des Transistors 12 gehoben, so daß der Transistor 12 zur Ableitung des Spannungspulses der elektrostatischen Entladung leitend wird. Gleichzeitig wird durch den positiven Spannungspuls der elektrostatischen Entladung der Transistor 14 durchgesteuert, so daß die Gatespannung des Transistors 12 an den Dioden 16 anliegt. Die Dioden 16 sind so ausgelegt, daß die Gatespannung über einer Flußspannung der Dioden 16 liegt, so daß zwar ein rascher Stromanstieg gegeben ist, jedoch die Gatespannung im wesentlichen konstant bleibt. Hierdurch wird erreicht, daß die Gatespannung des Transistors 12 nicht unter die Schwellspannung des Transistors 12 abfällt und dieser somit für die gesamte Pulsdauer des infolge der elektrostatischen Entladungen hervorgerufenen Spannungspulses leitend bleibt. Somit ist eine kontrollierte. Einstellung des Arbeitspunktes für einen wirksamen Schutz integrierter Schaltungen gegen elektrostatische Entladungen über die gesamte Dauer des Spannungspulses möglich. Darüber hinaus ist durch die gefundene Schaltungsanordnung nur ein sehr niedriger Flächenbedarf in integrierte Schaltungen für die Schutzschaltung 10 notwendig, so daß sich diese kostengünstig realisieren läßt.

Der Widerstand R dient der Definierung einer Gatespannung des MOS-Schutztransistors 12, wenn kein Spannungsimpuls infolge einer elektrostatischen Entladung anliegt. Ohne den Widerstand R wäre die Gatespannung variabel und könnte beispielsweise über einer Schaltspannung des MOS-Schutztransistors liegen. Der Widerstand R zieht die Gatespannung im Ruhezustand der Schutzschaltung 10 auf Masse.

## Patentansprüche

1. Schaltungsanordnung zum Schutz integrierter Schaltungen vor elektrostatischen Entladungen, mit einem ersten MOS-Schutztransistor (12), zwischen dessen Gateanschluß und Sourceanschluß ein zweiter MOS-Transistor (14) geschaltet ist, wobei der zweite MOS-Transistor mit seinem Drainanschluß (D1) mit dem Gateanschluß, seinem Sourceanschluß (S1) mit dem Sourceanschluß und seinem Gateanschluß (G1) mit dem Drainanschluß des ersten MOS-Transistors verbunden ist, **dadurch gekennzeichnet, daß** zwischen dem Sourceanschluß (S₁) des zweiten MOS-Transistors (14) und dem Sourceanschluß (S) des MOS-Schutztransistors (12) wenigstens eine Diode (16) geschaltet ist, so daß eine am Drainanschluß des Schutztransistors (12) anliegende Überspannung den Schutztransistor (12) in einen Durchbruchbetrieb schaltet, bis die Überspannung abgebaut ist.

2. Schaltungsanordnung nach Anspruch 1, **dadurch gekennzeichnet, daß** zwischen den Sourceanschlüssen (S₁, S) eine Reiheschaltung von Dioden (16) geschaltet ist.

3. Schaltungsanordnung nach Anspruch 2, **dadurch gekennzeichnet, daß** zwischen den Sourceanschlüssen (S₁, S) drei Dioden (16) in Reihe geschaltet sind.

4. Schaltungsanordnung nach Anspruch 1, **dadurch gekennzeichnet, daß** die Diode (16) eine Zenerdiode ist, die in Sperrichtung geschaltet ist.

## Claims

1. Circuit arrangement for protecting integrated circuits from electrostatic discharges, having a first MOS protective transistor (12), between whose gate connection and source connection a second MOS transistor (14) is connected, the drain connection (D1) of the second MOS transistor being connected to the gate connection, the source connection (S1) of the second MOS transistor being connected to the source connection, and the gate connection (G1) of the second MOS transistor being connected to the drain connection of the first MOS transistor, **characterized in that** at least one diode (16) is connected between the source connection (S₁) of the second MOS transistor (14) and the source connection (S) of the MOS protective transistor (12), so that an overvoltage present on the drain connection of the protective transistor (12) switches the protective transistor (12) to a breakdown mode until the overvoltage has been reduced.

2. Circuit arrangement according to Claim 1, **characterized in that** a series circuit comprising diodes (16) is connected between the source connections (S₁, S).

3. Circuit arrangement according to Claim 2, **characterized in that** three diodes (16) are connected in series between the source connections (S₁, S).

4. Circuit arrangement according to Claim 1, **characterized in that** the diode (16) is a zener diode connected in the reverse direction.

## Revendications

1. Ensemble circuit pour la protection de circuits intégrés contre des décharges électrostatiques, comprenant un premier transistor de protection MOS (12), entre les raccords de porte et de source duquel est monté un second transistor MOS (14), relié par son raccord de drain (D₁) au raccord de porte, par son raccord de source (S₁) au raccord de source et par son raccord de porte (G₁) au raccord de drain du premier transistor MOS,
**caractérisé en ce qu'**
entre le raccord de source (S₁) du second transistor MOS (14) et le raccord de source (S) du premier transistor MOS (12) est montée au moins une diode (16), de sorte qu'une surtension apparaissant au raccord de drain du transistor de protection (12) fait passer le transistor de protection (12) en fonctionnement de passage, jusqu'à ce que la surtension ait disparu.

2. Ensemble selon la revendication 1,
**caractérisé en ce qu'**
entre les raccords de source (S₁, S) des diodes (16) sont montées en série.

3. Ensemble selon la revendication 2,
**caractérisé en ce qu'**
entre les raccords de source (S₁, S), trois diodes (16) sont montées en série.

4. Ensemble selon la revendication 1,
**caractérisé en ce**
**que** la diode (16) est une diode Zener, connectée en direction de blocage.
